(19) Europäisches Patentamt
European Patent Office
Office européen des brevets

(11) Veröffentlichungsnummer: **0 138 006**
**A2**

(12) # EUROPÄISCHE PATENTANMELDUNG

(21) Anmeldenummer: **84110365.8**

(22) Anmeldetag: **31.08.84**

(51) Int. Cl.⁴: **C 09 K 19/20**, C 09 K 19/14, C 09 K 19/22, C 09 K 19/24, C 09 K 19/26, C 09 K 19/30, C 09 K 19/34

(30) Priorität: **17.09.83 DE 3333677**

(43) Veröffentlichungstag der Anmeldung: **24.04.85 Patentblatt 85/17**

(84) Benannte Vertragsstaaten: **CH DE FR GB LI**

(71) Anmelder: **Merck Patent Gesellschaft mit beschränkter Haftung, Frankfurter Strasse 250, D-6100 Darmstadt (DE)**

(72) Erfinder: **Heppke, Gerd, Prof. Dr., Johann-Georg-Strasse 3, D-1000 Berlin 31 (DE)**
Erfinder: **Oestreicher, Feodor, Stuttgarter Platz 16, D-1000 Berlin 12 (DE)**

(54) **Flüssigkristall-Phase.**

(57) Flüssigkristall-Phasen, enthaltend mindestens eine chirale Verbindung, dadurch gekennzeichnet, dass sie mindestens eine chirale Verbindung mit mindestens zwei chiralen Zentren im Molekül enthält, die benachbart oder durch eine acyclische Kette voneinander getrennt sind, vorzugsweise mindestens eine optisch aktive Verbindung der Formel I

$$R^1{-}CHCH_3{-}CHCH_3{-}R^2 \qquad I$$

wobei $R^1$ und $R^2$ unabhängig voneinander jeweils eine Gruppe $-Z^1-(A^1)_m-Z^2-(A^2)_n-Y$ bedeuten,
worin

$A^1$ und $A^2$ jeweils unabhängig voneinander eine 1,4-Phenylen-, Pyrimidin-2,5-diyl-, 1,4-Cyclohexylen-, 1,3-Dioxan-2,5-diyl-, 1,3-Dithian-2,5-diyl- oder 1,4-Bicyclo(2,2,2)-octylen-Gruppe, wobei diese auch ein- oder mehrfach substituiert sein kann durch F, Cl, Br, CN und/oder Alkylgruppen mit bis zu 12 C-Atomen, wobei in den Alkylgruppen 1 oder 2 $CH_2$-Gruppen durch O-Atome ersetzt sein können,

$Z^1$ –O–CO–, –CO–O–, –O– oder eine Einfachbindung,

$Z^2$ –CO–O–, –O–CO–, $-CH_2CH_2-$, $-OCH_2-$, $-CH_2O-$, –CH = N–, –N = CH–, –N = N–, –N(O) = N– oder eine Einfachbindung,

m und n jeweils unabhängig voneinander 0, 1 oder 2 und

Y eine geradkettige oder verzweigte Alkylgruppe mit bis zu 12 C-Atomen, wobei 1 oder 2 $CH_2$-Gruppen durch O-Atome ersetzt sein können, oder falls n 1 oder 2 ist, auch F, Cl, Br oder CN

bedeuten, zeigen weitgehend temperaturunabhängige elektrooptische Kenngrößen.

EP 0 138 006 A2

Merck Patent Gesellschaft
mit beschränkter Haftung

D a r m s t a d t

Flüssigkristall-Phase

Für Flüssigkristallanzeigen werden in zunehmenden Maße Flüssigkristall-Phasen benötigt, die eine Helixstruktur mit vorgegebenem Drehsinn ausbilden. So benötigt man derartige Materialien beispielsweise für den Schadt-Helfrich-Effekt, um den unerwünschten Effekt des "reverse twist" zu vermeiden (E. Guyon und W. Urbach in "Nonemissive Electrooptic Displays", Hrsg. A.R. Kmetz, F.K. von Willisen, Plenum Press, New York-London, 1976, Seite 127), für den cholesterisch-nematischen Phasenumwandlungseffekt sowie für Bistabilitätseffekte.

Ein wichtiges Problem ist dabei die Erzeugung einer geeigneten Temperaturfunktion der Helixganghöhe, die sich nach dem jeweiligen elektrooptischen Effekt und dessen spezieller Ausführung richtet.

Für Flüssigkristallanzeigeelemente auf der Basis der verdrillten nematischen Zelle kommt beispielsweise eine temperaturunabhängige Ganghöhe zur Vermeidung des "reverse twist" in Frage. Weiterhin konnte gezeigt werden, daß eine Kompensation der Temperaturdrift der Schwellenspannung einer verdrillten nematischen Zelle erreicht werden kann, wenn die Helixganghöhe mit zunehmender Temperatur abnimmt (P.R. Gerber, Physics Letters 78A, 285 (1980)). Gleichermaßen gilt für den Phasenumwandlungseffekt, daß durch stark abnehmende Helixganghöhe mit zunehmender Temperatur eine Kompensation der Schwellspannungsdrift erreicht wird (A. Göbl-Wunsch, G. Heppke und F. Oestreicher, Journal de Physique 40, 773 (1979)).

Im allgemeinen bestehen die für diese Zwecke angewendeten Flüssigkristall-Phasen aus Gemischen von nicht chiralen flüssigkristallinen Verbindungen, denen chirale Verbindungen zur Erzeugung der Helixstruktur zugesetzt werden. Praktisch alle bekannten chiralen Dotierstoffe induzieren Helixstrukturen, deren Ganghöhen über weite Bereiche mit der Temperatur mehr oder weniger stark zunehmen. In der Literatur wird lediglich über gewisse Spirobiindanderivate mit negativer Steigung der Temperaturfunktion berichtet (Advances of Infrared and Raman Spectroscopy 8 (1981) Kap. 4). In der Praxis ließ sich jedoch mit diesen Verbindungen die störende Temperaturdrift nicht beseitigen. Die oftmals gewünschte negative Steigung der Temperaturfunktion konnte bislang nur durch Verwendung zweier geeigneter Dotierstoffe unterschiedlichen Drehsinnes und unterschiedlicher relativer Temperaturabhängigkeit erreicht werden (DE-A-28 27 471). Nachteile dieses Mehrfachdotierungsverfahrens sind u. a. die Einhaltung des genauen Konzentrationsverhältnisses der beiden chiralen Verbindungen und die Einschränkung auf ein begrenztes Temperaturintervall sowie die notwendige hohe Gesamtkonzentration der Dotierstoffe (A. Göbl-Wunsch, G. Heppke und F. Oestreicher, Journal de Physique, 40, 773 (1979)). Außenanwendungen sind daher nicht möglich.

Der Erfindung lag daher die Aufgabe zugrunde, eine Flüssigkristall-Phase aufzufinden, die über temperaturunabhängige elektrooptische Kenngrößen, insbesondere über eine temperaturunabhängige Schwellspannung, verfügt und diese Eigenschaften bereits mit Hilfe eines einzigen Dotierstoffes erhält.

Der Erfindung lag weiterhin die Aufgabe zugrunde, chirale Verbindungen zu finden, die eine negative Steigung der Temperaturfunktion der Ganghöhe in Flüssigkristall-Phasen für Innen- und Außenanwendungen über einen weiten Temperaturbereich induzieren bei gleichzeitig hohem Verdrillungsvermögen.

Diese Aufgaben werden erfindungsgemäß durch eine Flüssigkristall-Phase gemäß Anspruch 1 sowie durch die Bereitstellung der Verbindungen der Formel I gelöst.

Es wurde gefunden, daß die Verbindungen der Formel I den obigen Forderungen in vorzüglicher Weise nachkommen.

Gegenstand der Erfindung sind eine Flüssigkristall-Phase mit mindestens einer chiralen Verbindung, dadurch gekennzeichnet, daß sie mindestens eine chirale Verbindung mit mindestens zwei chiralen Zentren im Molekül enthält, die benachbart oder durch eine acyclische Kette voneinander getrennt sind. Besonders geeignet sind Flüssigkristall-Phasen mit einem Gehalt an mindestens einer optisch aktiven Verbindung der Formel I

$$R^1-CHCH_3-CHCH_3-R^2 \qquad I$$

wobei $R^1$ und $R^2$ unabhängig voneinander jeweils eine Gruppe $-Z^1-(A^1)_m-Z^2-(A^2)_n-Y$ bedeuten, worin

$A^1$ und $A^2$ jeweils unabhängig voneinander eine 1,4-Phenylen-, Pyrimidin-2,5-diyl-, 1,4-Cyclohexylen-, 1,3-Dioxan-2,5-diyl-, 1,3-Dithian-2,5-diyl- oder 1,4-Bicyclo(2,2,2)-octylen-Gruppe, wobei diese auch ein- oder mehrfach substituiert sein kann durch F, Cl, Br, CN und/oder Alkylgruppen mit bis zu 12 C-Atomen, wobei in den Alkylgruppen 1 oder 2 $CH_2$-Gruppen durch O-Atome ersetzt sein können,

$Z^1$ -O-CO-, -CO-O-, -O- oder eine Einfachbindung,

$Z^2$ -CO-O-, -O-CO-, $CH_2CH_2$-, -$OCH_2$-, -$CH_2O$-, -CH=N-, -N=CH-, -N=N-, -N(O)=N- oder eine Einfachbindung,

m und n jeweils unabhängig voneinander 0, 1 oder 2 und

Y eine geradkettige oder verzweigte Alkylgruppe mit bis zu 12 C-Atomen, wobei 1 oder 2 $CH_2$-Gruppen durch O-Atome ersetzt sein können, oder, falls n 1 oder 2 ist, auch F, Cl, Br oder CN

bedeuten.

Gegenstand der Erfindung ist weiterhin ein Flüssigkristallanzeigeelement, enthaltend eine erfindungsgemäße Flüssigkristall-Phase.

Weiterhin ist Gegenstand der Erfindung die Verwendung von chiralen Verbindungen mit mindestens zwei chiralen Zentren im Molekül, die benachbart oder durch eine acyclische Kette voneinander getrennt sind, vorzugsweise von Verbindungen der Formel 1, zur Temperaturkompensation in Flüssigkristall-Phasen.

Gegenstand der Erfindung ist auch ein Verfahren zur Temperaturkompensation in Flüssigkristallanzeigeelementen, die eine Flüssigkristall-Phase enthalten, wobei man der Flüssigkristall-Phase mindestens 0,05 % an mindestens einer chiralen Verbindung mit mindestens zwei chiralen Zentren im Molekül, die benachbart oder durch eine acyclische Kette voneinander getrennt sind, vorzugsweise mindestens eine Verbindung der Formel I, zumischt.

Unter temperaturkompensierten Flüssigkristall-Phasen beziehungsweise Flüssigkristallanzeigeelementen sollen Flüssigkristall-Phasen beziehungsweise Flüssigkristallanzeigeelemente mit weitgehend temperaturunabhängigen elektrooptischen Kenngrößen, insbesondere mit weitgehend temperaturunabhängiger Schwellenspannung, verstanden werden.

Die erfindungsgemäße Flüssigkristall-Phase gemäß Anspruch 1 enthält mindestens eine chirale Verbindung mit mindestens zwei chiralen Zentren, die benachbart oder durch eine acyclische Kette voneinander getrennt sind.

Die acyclische Kette kann insbesondere eine substituierte oder unsubstituierte Alkylengruppe sein, wobei eine oder mehrere $CH_2$-Gruppen durch Heteroatome ersetzt sein können. Besonders bevorzugt sind acyclische Ketten aus der Gruppe

$-(CH_2)_p-$

$-CH=CX-$

$-C\equiv C-$

$-COO-$

-COS-
-CH=N-
-O-
$-CH_2O-$

wobei P vorzugsweise 1, 2 oder 3 ist und X Halogen, vorzugsweise Fluor oder Chlor, CN oder $CH_3$ bedeutet, sowie Kombinationen dieser Ketten.

Ein chirales Zentrum entsteht, wenn ein Molekülteil so gestaltet ist, daß er sich nicht mit seinem Spiegelbild zur Deckung bringen läßt. Dies ist beispielsweise der Fall, wenn ein C-Atom tetraedrisch von vier verschiedenen Liganden umgeben ist. Es bleibt dem Fachmann jedoch unbenommen, chirale Zentren auf andere Weise, etwa durch Bildung einer Chiralitätsachse oder -ebene, zu realisieren.

Die Verbindungen der Formel I umfassen Verbindungen der Teilformeln Ia bis Iu:

| | |
|---|---|
| $Y-CHCH_3-CHCH_3-Y$ | Ia |
| $Y-CHCH_3-CHCH_3-OCOY$ | Ib |
| $Y-CHCH_3-CHCH_3-Z^1-A^1-Y$ | Ic |
| $Y-CHCH_3-CHCH_3-Z^1-A^1-A^2-Y$ | Id |
| $Y-CHCH_3-CHCH_3-Z^1-A^1-Z^2-A^2-Y$ | Ie |
| $Y-CHCH_3-CHCH_3-Z^1-(A^1)_2-Z^2-A^2-Y$ | If |
| $Y-CHCH_3-CHCH_3-Z^1-A^1-Z^2-(A^1)_2-Y$ | Ig |
| $YCOO-CHCH_3-CHCH_3-OCOY$ | Ih |
| $YCOO-CHCH_3-CHCH_3-Z^1-A^1-Y$ | Ii |
| $YCOO-CHCH_3-CHCH_3-Z^1-A^1-A^2-Y$ | Ij |
| $YCOO-CHCH_3-CHCH_3-Z^1-A^1-Z^2-A^2-Y$ | Ik |
| $YCOO-CHCH_3-CHCH_3-Z^1-(A^1)_2-Z^2-A^2-Y$ | Il |

| | |
|---|---|
| $YCOO-CHCH_3-CHCH_3-Z^1-A^1-Z^2-(A^2)_2-Y$ | Im |
| $Y-A^1-Z^1-CHCH_3-CHCH_3-Z^1-A^1-Y$ | In |
| $Y-A^1-Z^1-CHCH_3-CHCH_3-Z^1-A^1-A^2-Y$ | Io |
| $Y-A^1-Z^1-CHCH_3-CHCH_3-Z^1-A^1-Z^2-A^2-Y$ | Ip |
| $Y-A^1-Z^1-CHCH_3-CHCH_3-Z^1-(A^1)_2-Z^2-A^2-Y$ | Iq |
| $Y-A^1-Z^1-CHCH_3-CHCH_3-Z^1-A^1-Z^2-(A^2)_2-Y$ | Ir |
| $Y-A^1-A^2-Z^1-CHCH_3-CHCH_3-Z^1-A^1-A^2-Y$ | Is |
| $Y-A^1-A^2-Z^1-CHCH_3-CHCH_3-Z^1-A^1-Z^2-A^2-Y$ | It |
| $Y-A^2-Z^2-A^1-Z^1-CHCH_3-CHCH_3-Z^1-A^1-Z^2-A^2-Y$ | Iu |

In den Verbindungen der vor- und nachstehenden Formeln bedeutet Y vorzugsweise Alkyl, ferner Alkoxy, eine andere Oxaalkylgruppe, CN oder F.

In den Verbindungen der vor- und nachstehenden Formeln können die Alkylreste, in denen auch eine ("Alkoxy" bzw "Oxaalkyl") oder zwei $CH_2$-Gruppen ("Alkoxyalkoxy" bzw. "Dioxaalkyl") durch O-Atome ersetzt sein können, geradkettig oder verzweigt sein. Vorzugsweise sind sie geradkettig, haben 2, 3, 4, 5, 6 oder 7 C-Atome und bedeuten demnach bevorzugt Ethyl, Propyl, Butyl, Pentyl, Hexyl, Heptyl, Ethoxy, Propoxy, Butoxy, Pentoxy, Hexoxy, Heptoxy, 2-Oxapropyl (=Methoxymethyl), 2-Oxabutyl(=Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, ferner Methyl, Octyl, Nonyl, Decyl, Methoxy, Octoxy, Nonoxy, Decoxy, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl, 1,3-Dioxabutyl (= Methoxymethoxy), 1,3-, 1,4- oder 2,4-Dioxapentyl, 1,3-, 1,4-, 1,5-, 2,4-, 2,5- oder 3,5-Dioxahexyl, 1,3-, 1,4-, 1,5-, 1,6-, 2,4-, 2,5-, 2,6- 3,5-, 3,6- oder 4,6-Dioxaheptyl.

Verbindungen der Formeln I sowie Ia bis Iu mit verzweigten Flügelgruppen Y können auch von Bedeutung sein. Verzweigte Gruppen dieser Art enthalten in der Regel nicht mehr als eine Kettenverzweigung. Bevorzugte verzweigte Reste Y sind Isopropyl, 2-Butyl (= 1-Methylpropyl), Isobutyl (= 2-Methylpropyl), 2-Methylbutyl, Isopentyl (= 3-Methylbutyl), 2-Methyl-pentyl, 3-Methylpentyl, 2-Ethylhexyl, 2-Propylpentyl, Isopropoxy, 2-Methylpropoxy, 2-Methylbutoxy, 3-Methyl-butoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl.

Der Einfachheit halber bedeuten im folgenden "Phe" eine 1,4-Phenylengruppe, "Cy" eine 1,4-Cyclohexylengruppe, "Dio" eine 1,3-Dioxan-2,5-diylgruppe, "Bi" eine Bicyclo-(2,2,2)-octylengruppe und "Pyr" eine Pyrimidin-2,5-diylgruppe, wobei diese Gruppen, unsubstituiert oder auch ein- oder mehrfach substituiert sein können durch F, Cl, Br, CN und/oder Alkylgruppen mit bis zu 12 C-Atomen, wobei in den Alkylgruppen 1 oder 2 $CH_2$-Gruppen durch O-Atome ersetzt sein können.

$A^1$ und $A^2$ sind jeweils unabhängig voneinander bevorzugt Cy, Phe oder Dio; bevorzugt enthält die Verbindung der Formel I nicht mehr als einen der Reste Dio, Bi oder Pyr.

$Z^1$ und $Z^2$ sind bevorzugt Einfachbindungen oder Carboxylgruppen. $Z^2$ bedeutet weiterhin bevorzugt eine $-CH_2CH_2-$Gruppe. (m+n) ist vorzugsweise 0, 1, 2 oder 3, besonders bevorzugt 0 oder 2.

Bevorzugte Gruppen $R_1$ und $R_2$ sind:

-Cy-Phe-Y
-Phe-Cy-Y
-Phe-Phe-Y
-Cy-Cy-Y
-Phe-Phe-Phe-Y
-Cy-Phe-Phe-Y
-Cy-Cy-Phe-Y
-Dio-Phe-Phe-Y
-Dio-Cy-Y
-Dio-Phe-Y
-Pyr-Phe-Y
-Pyr-Cy-Y
$-(A^1)_2-A^2-Y$
$-A^1-CH_2CH_2-A^2-Y$
$-A^1-COO-A^2-Y$
$-A^1-OCO-A^2-Y$
$-Cy-Ph-CH_2CH_2-Cy-Y$
-Cy-COO-Cy-Y
-Cy-COO-Ph-Y
-Ph-COO-Ph-Y

Die Verbindungen der Formel I enthalten vorzugsweise 0, 1, 2, 3, 4, 5 oder 6 Ringstrukturen $A^1$ und $A^2$. Besonders bevorzugt sind Verbindungen mit 2 bis 4 Ringstrukturen $A^1$ und $A^2$.

Unter den Verbindungen der Formeln I sowie Ia bis Iu sind diejenigen bevorzugt, in denen mindestens einer der darin enthaltenen Reste eine der angegebenen bevorzugten Bedeutungen hat.

Von den Verbindungen der Formel I existiert jeweils ein Enantiomerenpaar für die erythro- und die threo-Form, wobei die erste bei symmetrischen Verbindungen der Formel I der meso-Form entspricht. Zur Temperaturkompensation in Flüssigkristallanzeigen werden vorzugsweise die reinen, getrennten Enantiomeren der erythro- oder threo-Form, besonders bevorzugt der threo-Form, eingesetzt.

Die erfindungsgemäßen Flüssigkristall-Phasen bestehen aus 2 bis 18, vorzugsweise 3 bis 15 Komponenten, darunter mindestens einer Verbindung der Formel I. Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexyl-ester, Phenylcyclohexane, Cyclohexylbiphenyle, Cyclohexylcyclohexane, Cyclohexylnaphthaline, 1,4-Biscyclohexylbenzole, 4,4'-Bis-cyclohexylbiphenyle, Phenyl- oder Cyclohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristall-Phasen in Frage kommenden Verbindungen lassen sich durch die Formel III charakterisieren,

$$R^3\text{-}L\text{-}G\text{-}E\text{-}R^4 \qquad \text{III}$$

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | $-CH_2-CH_2-$ |
| | -CO-O- | $-CH_2-O-$ |
| | -CO-S- | $-CH_2-S-$ |
| | -CH=N- | -COO-Phe-COO- |

oder eine C-C-Einfachbindung, Q Halogen, vorzugsweise Chlor, oder -CN, und $R^3$ und $R^4$ jeweils Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten.

Bei den meisten dieser Verbindungen sind $R^3$ und $R^4$ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die erfindungsgemäßen Flüssigkristall-Phasen enthalten mindestens 0,05 % an mindestens einer Verbindung der Formel I. Vorzugsweise enthalten sie etwa 0,05 bis 35 %, insbesondere 0,1 bis 10 %, einer oder mehrerer Verbindungen der Formel I.

Für flüssigkristalline Dielektrika besonders bevorzugte erfindungsgemäße Flüssigkristall-Phasen enthalten 0,1 bis 3 % einer oder mehrerer Verbindungen der Formel I. Besonders bevorzugt sind Dielektrika, die nur eine Verbindung der Formel I enthalten.

Die Herstellung der erfindungsgemäßen Flüssigkristall-Phasen erfolgt in an sich üblicher Weise. In der Regel werden die Komponenten ineinander gelöst, zweckmäßig bei erhöhter Temperatur. Durch geeignete Zusätze können die Flüssigkristall-Phasen nach der Erfindung so modifiziert werden, daß sie in allen bisher bekannt gewordenen Arten von Flüssigkristallanzeigeelementen verwendet werden können.

Die Verbindungen der Formel I können weiterhin, gegebenenfalls auch ohne Zumischung weiterer Komponenten, als Flüssigkristall-Phasen für Temperaturindikatoren verwendet werden.

Die obengenannten Zusätze sind dem Fachmann bekannt und in der Literatur ausführlich beschrieben. Beispielsweise können Leitsalze, vorzugsweise Ethyl-dimethyl-dodecyl-ammonium-4-hexyloxybenzoat, Tetrabutylammonium-tetraphenylboranat oder Komplexsalze von Kronenethern (vgl. z.B. I. Haller et al., Mol. Cryst. Liq. Cryst. Band 24, Seiten 249 - 258 (1973)) zur Verbesserung der Leitfähigkeit, dichroitische Farbstoffe zur Herstellung farbiger Guest-Host-Systeme oder Substanzen zur Veränderung der dielektrischen Anisotropie, der Viskosität und/oder der Orientierung der nematischen Phasen zugesetzt werden. Derartige Substanzen sind zum Beispiel in den DE-OS 22 09 127, 22 40 864, 23 21 632, 23 38 281, 24 50 088, 25 37 430, 28 53 728 und 29 02 177 beschrieben.

In den Abbildungen 1 und 2 werden die vorteilhaften Eigenschaften für einige Flüssigkristall-Phasen dargestellt.

Abbildung 1 zeigt die Temperaturabhängigkeiten der "Molecular Twisting Power" M/pc (M = Molmasse in g/mol; p = Ganghöhe in µm; c = Konzentration in Gew.-%) für einige erfindungsgemäße Dielektrika [Verbindungen der Formel I in RO-TN 404 (handelsübliche nematische Mischung auf der Basis von Cyanopyrimidinen); 1 = 2,3-Bis-(p-hexoxybenzoyloxy)-butan , 6 = 2,3-Bis-(trans,trans-4-n-pentyl-cyclohexylcyclohexyl-4'-carbonyloxy)-butan].

Die Verwendung der Verbindungen der Formel I erzeugt ein sehr ähnliches Temperaturverhalten aller Flüssigkristall-Phasen bei dieser Auftragung, offensichtlich eine Folge des gemeinsamen molekularen Strukturmerkmales, d. h. der erfindungsgemäßen Anordnung der beiden chiralen Zentren in der chiralen Verbindung.

Die Verbindungen der Formel I ermöglichen, mit einem Dotierstoff in mittleren Temperaturbereichen eine Flüssigkristall-Phase mit weitgehend temperaturunabhängigen elektrooptischen Kenngrößen zu erhalten. Der durch die Wahl verschiedener Gruppen $R^1$ und $R^2$ erreichte Effekt läßt sich bei dieser Auftragung im wesentlichen beschreiben als eine Verschiebung der Inversionstemperatur nach höheren und vorzugsweise niedrigeren Temperaturen.

Die Inversionstemperatur liegt vorzugsweise außerhalb des Arbeitsbereichs der Flüssigkristall-Zelle, wodurch das Auftreten von "reverse twist" in diesem Temperaturbereich vermieden wird.

Abbildung 2 zeigt die Temperaturfunktionen für zwei weitere erfindungsgemäße Flüssigkristall-Phasen [Verbindungen der Formel I in ZLI 1132 (handelsübliche nematische Mischung der Fa. E. Merck, Darmstadt); 6 = 2,3-Bis-(trans,trans-4-n-pentylcyclohexylcyclohexyl-4'-carbonyloxy)-butan, 7 = 2,3-Bis-(p-2-methylbutylbenzoyloxy)-butan].

Es ist erkennbar, daß der prinzipielle Verlauf der Temperaturfunktionen weitgehend unabhängig vom verwendeten nematischen Basismaterial ist.

Die Konzentration der Verbindungen der Formel I in den in den Abbildungen 1 und 2 gezeigten Flüssigkristall-Phasen beträgt jeweils 1,6 %.

Die vor- und nachstehend genannte Mischung ZLI-1132 setzt sich zusammen aus

24 % p-trans-4-Propylcyclohexyl-benzonitril,
36 % p-trans-4-Pentylcyclohexyl-benzonitril,
25 % p-trans-4-Heptylcyclohexyl-benzonitril und
15 % 4-Cyan-4'-(trans-4-pentylcyclohexyl)-biphenyl.

Die erfindungsgemäßen Flüssigkristall-Phasen weisen weitgehend temperaturunabhängige elektrooptische Kenngrößen auf. Wie üblich werden hier die Kenngrößen als weitgehend temperaturunabhängig bezeichnet, falls diese nicht mehr als $\pm$ 0,4 Prozent pro Grad Celsius im Temperaturbereich von 0° bis 40°C und/oder nicht mehr als $\pm$ 0,15, insbesondere nicht mehr als $\pm$ 0,05 Prozent pro Grad Celsius im Temperaturbereich von -20° bis 80°C variieren, jeweils bezogen auf den Wert bei 20°C.

Die folgenden Beispiele sollen die Erfindung erläutern, ohne sie zu begrenzen. F. = Schmelzpunkt, K. = Klärpunkt. Vor- und nachstehend bedeuten Prozentangaben Gewichtsprozent; alle Temperaturen sind in Grad Celsius angegeben. "Übliche Aufarbeitung" bedeutet: man gibt Wasser hinzu, extrahiert mit Methylenchlorid, trennt ab, trocknet die organische Phase, dampft ein und reinigt das Produkt durch Kristallisation und/oder Chromatographie.

Beispiel 1

6,4 g p-(trans-4-n-Pentylcyclohexyl)-benzoesäurechlorid [erhältlich durch Umsetzung von p-(trans-4-n-Pentylcyclohexyl)-benzoesäure (aus p-trans-4-n-Pentylcyclohexylbenzonitril) mit Thionylchlorid] in 20 ml Toluol werden zu einem Gemisch aus 1 ml D-(-)-2,3-Butandiol, 20 ml Toluol und 2,4 ml Pyridin bei 50 ° zugetropft. Das Reaktionsgemisch wird 8 Stunden am Rückfluß gekocht. Das Pyridinium-chlorid wird heiß abgesaugt und das Filtrat wie üblich aufgearbeitet. Man erhält optisch aktives 2,3-Bis-(p-trans-4-n-pentylcyclohexylbenzoyloxy)-butan, F. 138,5 °.

Analog werden hergestellt:

2,3-Bis-(p-trans-4-ethylcyclohexylbenzoyloxy)-butan
2,3-Bis-(p-trans-4-propylcyclohexylbenzoyloxy)-butan
2,3-Bis-(p-trans-4-butylcyclohexylbenzoyloxy)-butan
2,3-Bis-(p-trans-4-hexylcyclohexylbenzoyloxy)-butan
2,3-Bis-(p-trans-4-heptylcyclohexylbenzoyloxy)-butan
2,3-Bis-(p-trans-4-octylcyclohexylbenzoyloxy)-butan, F. 112 °
2,3-Bis-(p-trans-4-decylcyclohexylbenzoyloxy)-butan

2,3-Bis-[p-(p'-trans-4-ethylcyclohexylphenyl)-benzoyloxy]-butan
2,3-Bis-[p-(p'-trans-4-propylcyclohexylphenyl)-benzoyloxy]-butan
2,3-Bis-[p-(p'-trans-4-butylcyclohexylphenyl)-benzoyloxy]-butan
2,3-Bis-[p-(p'-trans-4-pentylcyclohexylphenyl)-benzoyloxy]-butan, F. 182 °, K. 245-252 ° (cholesterisch-isotrop; die Verbindung zeigt brillante Selektivreflexionsfarben von blau nach rot beim Abkühlen)
2,3-Bis-[p-(p'-trans-4-hexylcyclohexylphenyl)-benzoyloxy]-butan
2,3-Bis-[p-(p'-trans-4-heptylcyclohexylphenyl)-benzoyloxy]-butan
2,3-Bis-[p-(p'-trans-4-octylcyclohexylphenyl)-benzoyloxy]-butan
2,3-Bis-[p-(p'-trans-4-decylcyclohexylphenyl)-benzoyloxy]-butan
2,3-Bis-(trans,trans-4-ethylcyclohexylcyclohexyl-4'-carbonyloxy)-butan
2,3-Bis-(trans,trans-4-propylcyclohexylcyclohexyl-4'-carbonyloxy)-butan
2,3-Bis-(trans,trans-4-butylcyclohexylcyclohexyl-4'-carbonyloxy)-butan
2,3-Bis-(trans,trans-4-pentylcyclohexylcyclohexyl-4'-carbonyloxy)-butan, F. 187 °
2,3-Bis-(trans,trans-4-hexylcyclohexylcyclohexyl-4'-carbonyloxy)-butan
2,3-Bis-(trans,trans-4-heptylcyclohexylcyclohexyl-4'-carbonyloxy)-butan
2,3-Bis-(trans,trans-4-octylcyclohexylcyclohexyl-4'-carbonyloxy)-butan
2,3-Bis-(trans,trans-4-decylcyclohexylcyclohexyl-4'-carbonyloxy)-butan

2,3-Bis-[p-(p'-ethoxybenzoyloxy)-benzoyloxy]-butan
2,3-Bis-[p-(p'-propoxybenzoyloxy)-benzoyloxy]-butan
2,3-Bis-[p-(p'-butoxybenzoyloxy)-benzoyloxy]-butan
2,3-Bis-[p-(p'-pentoxybenzoyloxy)-benzoyloxy]-butan
2,3-Bis-[p-(p'-hexoxybenzoyloxy)-benzoyloxy]-butan, F. 133 °
2,3-Bis-[p-(p'-heptoxybenzoyloxy)-benzoyloxy]-butan
2,3-Bis-[p-(p'-octoxybenzoyloxy)-benzoyloxy]-butan
2,3-Bis-[p-(p'-decoxybenzoyloxy)-benzoyloxy]-butan
2,3-Bis-[p-(p'-cyanbenzoyloxy)-benzoyloxy]-butan
2,3-Bis-[p-(p'-ethylbenzoyloxy)-benzoyloxy]-butan
2,3-Bis-[p-(p'-butylbenzoyloxy)-benzoyloxy]-butan
2,3-Bis-[p-(p'-pentylbenzoyloxy)-benzoyloxy]-butan
2,3-Bis-[p-(p'-heptylbenzoyloxy)-benzoyloxy]-butan

2,3-Bis-(p-ethoxybenzoyloxy)-butan
2,3-Bis-(p-propoxybenzoyloxy)-butan
2,3-Bis-(p-butoxybenzoyloxy)-butan
2,3-Bis-(p-pentoxybenzoyloxy)-butan
2,3-Bis-(p-hexoxybenzoyloxy)-butan, F. 52 °
2,3-Bis-(p-heptoxybenzoyloxy)-butan
2,3-Bis-(p-octoxybenzoyloxy)-butan
2,3-Bis-(p-decoxybenzoyloxy)-butan
2,3-Bis-(p-ethylbenzoyloxy)-butan
2,3-Bis-(p-propylbenzoyloxy)-butan
2,3-Bis-(p-butylbenzoyloxy)-butan
2,3-Bis-(p-pentylbenzoyloxy)-butan
2,3-Bis-(p-hexylbenzoyloxy)-butan
2,3-Bis-(p-heptylbenzoyloxy)-butan
2,3-Bis-(p-octylbenzoyloxy)-butan
2,3-Bis-(p-decylbenzoyloxy)-butan
2,3-Bis-(p-1-methylpropylbenzoyloxy)-butan
2,3-Bis-(p-(R)-2-methylpropylbenzoyloxy)-butan

2,3-Bis-(p-(R)-2-methylbutylbenzoyloxy)-butan, farbloses Öl, kein F. bis -20 °

2,3-Bis-(p-(S)-3-methylbutylbenzoyloxy)-butan

2,3-Bis-(p-(R)-2-methylpentylbenzoyloxy)-butan

2,3-Bis-(p-2-ethylhexylbenzoyloxy)-butan

2,3-Bis-(p-(S)-2-methylpropoxybenzoyloxy)-butan

2,3-Bis-(p-(R)-2-methylbutoxybenzoyloxy)-butan

2,3-Bis-(p-(S)-3-methylbutoxybenzoyloxy)-butan

2,3-Bis-(p-(R)-2-methylpentoxybenzoyloxy)-butan

2,3-Bis-(p-2-ethylhexoxybenzoyloxy)-butan

2,3-Bis-(p-(R)-2-oxa-3-methylbutylbenzoyloxy)-butan.

Beispiel 2

0,8 g optisch aktives 3-p-(5-Butyl-1,3-dioxan-2-yl)-benzoyloxy-2-butanol in 20 ml Benzol und 1 ml Pyridin werden mit 0,25 g Propionsäurechlorid versetzt und 5 Stunden am Rückfluß erhitzt. Nach üblicher Aufarbeitung erhält man 3-p-(5-Butyl-1,3-dioxan-2-yl)-benzoyloxy-2-propionyloxy-butan.

Analog werden hergestellt:

3-p-(5-Butyl-1,3-dioxan-2-yl)-benzoyloxy-2-acetoxy-butan

3-p-(5-Butyl-1,3-dioxan-2-yl)-benzoyloxy-2-butanoyloxy-butan

3-p-(5-Butyl-1,3-dioxan-2-yl)-benzoyloxy-2-pentanoyloxy-butan

3-p-(5-Butyl-1,3-dioxan-2-yl)-benzoyloxy-2-hexanoyloxy-butan

3-p-(5-Butyl-1,3-dioxan-2-yl)-benzoyloxy-2-decanoyloxy-butan

3-p-(trans-4-n-Pentylcyclohexyl)-benzoyloxy-2-acetoxy-butan
3-p-(trans-4-n-Pentylcyclohexyl)-benzoyloxy-2-propionyloxy-butan
3-p-(trans-4-n-Pentylcyclohexyl)-benzoyloxy-2-butanoyloxy-butan
3-p-(trans-4-n-Pentylcyclohexyl)-benzoyloxy-2-pentanoyloxy-butan
3-p-(trans-4-n-Pentylcyclohexyl)-benzoyloxy-2-hexanoyloxy-butan
3-p-(trans-4-n-Pentylcyclohexyl)-benzoyloxy-2-decanoyloxy-butan

3-p-Cyanbenzoyloxy-2-acetoxy-butan
3-p-Cyanbenzoyloxy-2-propionyloxy-butan
3-p-Cyanbenzoyloxy-2-butanoyloxy-butan
3-p-Cyanbenzoyloxy-2-pentanoyloxy-butan
3-p-Cyanbenzoyloxy-2-hexanoyloxy-butan
3-p-Cyanbenzoyloxy-2-decanoyloxy-butan

3-p-Ethylbenzoyloxy-2-acetoxy-butan
3-p-Ethylbenzoyloxy-2-propionyloxy-butan
3-p-Ethylbenzoyloxy-2-butanoyloxy-butan
3-p-Ethylbenzoyloxy-2-pentanoyloxy-butan
3-p-Ethylbenzoyloxy-2-hexanoyloxy-butan
3-p-Ethylbenzoyloxy-2-decanoyloxy-butan.

Beispiel 3

0,7 g D-(-)-3-Propoxy-2-butanol, 1,5 g p-(trans-4-n-Pentylcyclohexyl)-benzoesäurechlorid, 20 ml Toluol und 2,1 ml Pyridin werden 6 Stunden am Rückfluß gekocht. Das Pyridiniumchlorid wird heiß abgesaugt und das Filtrat wie üblich aufgearbeitet. Man erhält optisch aktives 3-Propoxy-2-[p-(trans-4-n-Pentylcyclohexyl)-benzoyloxy]-butan.

Analog werden hergestellt:

3-Methoxy-2-[p-(trans-4-n-Pentylcyclohexyl)-benzoyloxy]-butan

3-Ethoxy-2-[p-(trans-4-n-Pentylcyclohexyl)-benzoyloxy]-butan

3-Butoxy-2-[p-(trans-4-n-Pentylcyclohexyl)-benzoyloxy]-butan

3-Pentoxy-2-[p-(trans-4-n-Pentylcyclohexyl)-benzoyloxy]-butan

3-Hexoxy-2-[p-(trans-4-n-Pentylcyclohexyl)-benzoyloxy]-butan

3-Heptoxy-2-[p-(trans-4-n-Pentylcyclohexyl)-benzoyloxy]-butan

3-Decoxy-2-[p-(trans-4-n-Pentylcyclohexyl)-benzoyloxy]-butan

3-Methoxy-2-(trans-4-n-pentylcyclohexylcarbonyloxy)-butan
3-Ethoxy-2-(trans-4-n-pentylcyclohexylcarbonyloxy)-butan
3-Propoxy-2-(trans-4-n-pentylcyclohexylcarbonyloxy)-butan
3-Butoxy-2-(trans-4-n-pentylcyclohexylcarbonyloxy)-butan
3-Pentoxy-2-(trans-4-n-pentylcyclohexylcarbonyloxy)-butan
3-Hexoxy-2-(trans-4-n-pentylcyclohexylcarbonyloxy)-butan
3-Heptoxy-2-(trans-4-n-pentylcyclohexylcarbonyloxy)-butan
3-Decoxy-2-(trans-4-n-pentylcyclohexylcarbonyloxy)-butan.

Beispiel 4

Man löst 1 g D-(-)-2,3-Butandiol, 14,8 g 2-[4-trans, trans-(4-n-Heptylcyclohexyl)-cyclohexyl]-bromethan und 2 g Tetrabutylammoniumhydrogensulfat bei 60° in 20 ml Toluol, fügt eine Lösung von 15 g Natriumhydroxid in 30 ml Wasser hinzu und rührt intensiv 20 Stunden bei 60°. Anschließend wird die organische Phase abgetrennt. Nach üblicher Aufarbeitung erhält man optisch aktives 2,3-Bis-2-[4-trans,trans-(4-n-Heptylcyclohexyl)-cyclohexyl]-ethoxybutan.

Analog werden hergestellt:

2,3-Bis-2-[4-trans,trans-(4-ethylcyclohexyl)-cyclohexyl]-ethoxybutan

2,3-Bis-2-[4-trans,trans-(4-butylcyclohexyl)-cyclohexyl]-ethoxybutan

2,3-Bis-2-[4-trans,trans-(4-pentylcyclohexyl)-cyclohexyl]-ethoxybutan

2,3-Bis-2-[4-trans,trans-(4-decylcyclohexyl)-cyclohexyl]-ethoxybutan

2,3-Bis-2-(trans-4-ethylcyclohexyl)-ethoxybutan

2,3-Bis-2-(trans-4-butylcyclohexyl)-ethoxybutan

2,3-Bis-2-(trans-4-pentylcyclohexyl)-ethoxybutan

2,3-Bis-2-(trans-4-heptylcyclohexyl)-ethoxybutan

2,3-Bis-2-(trans-4-decylcyclohexyl)-ethoxybutan

2,3-Bis-2-[trans-4-(p-ethylphenyl)-cyclohexyl]-ethoxybutan

2,3-Bis-2-[trans-4-(p-butylphenyl)-cyclohexyl]-ethoxybutan

2,3-Bis-2-[trans-4-(p-pentylphenyl)-cyclohexyl]-ethoxybutan

2,3-Bis-2-[trans-4-(p-heptylphenyl)-cyclohexyl]-ethoxybutan

2,3-Bis-2-[trans-4-(p-cyanphenyl)-cyclohexyl]-ethoxybutan

2,3-Bis-2-[trans-4-(p-fluorphenyl)-cyclohexyl]-ethoxybutan.

Es folgen Beispiele für erfindungsgemäße Flüssigkristall-Phasen mit einem Gehalt an mindestens einer optisch aktiven Verbindung der Formel I. Es ist jeweils der Absolutwert des pc-Produktes angegeben.

Beispiel A

Eine Flüssigkristall-Phase aus 1,2 % 2,3-Bis-(p-trans-4-n-pentylcyclohexylbenzoyloxy)-butan, gelöst in RO-TN 404, zeigt bei Rechtshändigkeit der Helixstruktur ein pc-Produkt von 36,5 μm . Gew.-% bei 25 °.

Beispiel B

Eine Flüssigkristall-Phase aus 3,0 % 2,3-Bis-(p-hexoxybenzoyloxy)-butan, gelöst in RO-TN 404 (ZLI 1132), zeigt bei Rechtshändigkeit der Helixstruktur ein pc-Produkt von 13,7 (20,0) μm . Gew.-% bei 25 °.

Beispiel C

Eine Flüssigkristall-Phase aus 35 % 2,3-Bis-(p-trans-4-n-heptylcyclohexylbenzoyloxy)-butan, gelöst in RO-TN 404, zeigt bei Rechtshändigkeit der Helixstruktur ein pc-Produkt von 36,5 μm . Gew.-% bei 25 °.

Beispiel D

Eine Flüssigkristall-Phase aus 2,4 % 2,3-Bis-(trans, trans-4-pentylcyclohexylcyclohexyl-4'-carbonyloxy)-butan, gelöst in RO-TN 404 (ZLI 1132), zeigt bei Linkshändigkeit der Helixstruktur ein pc-Produkt von 116 (96) μm . Gew.-% bei 25 °.

Beispiel E

Eine Flüssigkristall-Phase aus 1,6 % 2,3-Bis-[p-(p'-hexoxybenzoyloxy)-benzoyloxy]-butan, gelöst in RO-TN 404 (ZLI 1132), zeigt bei Rechtshändigkeit der Helixstruktur ein pc-Produkt von 30,3 (51,1) µm . Gew.-% bei 25 °.

Beispiel F

Eine Flüssigkristall-Phase aus 0,1 % 2,3-Bis-[p-(p'-trans-4-n-pentylcyclohexylphenyl)-benzoyloxy]-butan, gelöst in RO-TN 404, zeigt bei Rechtshändigkeit der Helixstruktur ein pc-Produkt von 55,8 µm . Gew.-% bei 25 °.

Beispiel G

Eine Flüssigkristall-Phase aus 0,05 % 2,3-Bis-(p-(R)-2-methylbutylbenzoyloxy)-butan, gelöst in ZLI-1132, zeigt bei Rechtshändigkeit der Helixstruktur ein pc-Produkt von 9,2 µm . Gew.-% bei 25 °.

Beispiel H

Die Flüssigkristall-Phase aus Beispiel D (2,4 % 2,3-Bis-(trans,trans-4-pentylcyclohexyl-cyclohexyl-4'-carbonyloxy)-butan gelöst in RO-TN 404) zeigt bei Linkshändigkeit der Helixstruktur ein pc-Produkt von 140 µm . Gew.-% bei 10° und ein pc-Produkt von 24 µm. Gew.-% bei 100 °C, was einer Änderung von M/pc von -4,4 bei 10° auf -25,9 bei 100° entspricht.

Merck Patent Gesellschaft
mit beschränkter Haftung

D a r m s t a d t

Patentansprüche

1. Flüssigkristall-Phase, enthaltend mindestens eine chirale Verbindung, dadurch gekennzeichnet, daß sie mindestens eine chirale Verbindung mit mindestens zwei chiralen Zentren im Molekül enthält, die benachbart oder durch eine acyclische Kette voneinander getrennt sind.

2. Flüssigkristall-Phase nach Anspruch 1, gekennzeichnet durch einen Gehalt an mindestens einer optisch aktiven Verbindung der Formel I

$$R^1\text{-}CHCH_3\text{-}CHCH_3\text{-}R^2 \qquad \text{I}$$

wobei $R^1$ und $R^2$ unabhängig voneinander jeweils eine Gruppe $-Z^1-(A^1)_m-Z^2-(A^2)_n-Y$ bedeuten, worin

$A^1$ und $A^2$ jeweils unabhängig voneinander eine 1,4-Phenylen-, Pyrimidin-2,5-diyl-, 1,4-Cyclohexylen-, 1,3-Dioxan-2,5-diyl-, 1,3-Dithian-2,5-diyl- oder 1,4-Bicyclo(2,2,2)-octylen-Gruppe, wobei diese auch ein- oder mehrfach substituiert sein kann durch F, Cl, Br, CN und/oder Alkylgruppen mit bis zu 12 C-Atomen, wobei in den Alkylgruppen 1 oder 2 $CH_2$-Gruppen durch O-Atome ersetzt sein können,

$Z^1$ -O-CO-, -CO-O-, -O- oder eine Einfachbindung,

$Z^2$ -CO-O-, -O-CO-, $-CH_2CH_2-$, $-OCH_2-$, $-CH_2O-$, -CH=N-, -N=CH-, -N=N-, -N(O)=N- oder eine Einfachbindung,

m und n jeweils unabhängig voneinander 0, 1 oder 2 und

Y eine geradkettige oder verzweigte Alkylgruppe mit bis zu 12 C-Atomen, wobei 1 oder 2 $CH_2$-Gruppen durch O-Atome ersetzt sein können, oder falls n 1 oder 2 ist, auch F, Cl, Br oder CN

bedeuten.

3. Flüssigkristallanzeigeelemente, enthaltend eine Flüssigkristall-Phase nach Anspruch 1 oder 2.

4. Verwendung von chiralen Verbindungen mit mindestend zwei chiralen Zentren im Molekül, die benachbart oder durch eine acylische Kette voneinander getrennt sind, zur Temperaturkompensation in Flüssigkristall-Phasen.

5. Verwendung der Verbindungen der Formel I gemäß Anspruch 4.

6. Verfahren zur Temperaturkompensation in Flüssigkristallanzeigelementen, die eine Flüssigkristall-Phase enthalten, dadurch gekennzeichnet, daß man der Flüssigkristall-Phase mindestens 0,05 % an mindestens einer chiralen Verbindung mit mindestens zwei chiralen Zentren im Molekül, die benachbart oder durch eine acyclische Kette voneinander getrennt sind, zumischt.

7. Verfahren zur Temperaturkompensation in Flüssigkristallanzeigelementen gemäß Anspruch 6, dadurch gekennzeichnet, daß man der Flüssigkristall-Phase mindestens 0,05 % an mindestens einer Verbindung der Formel I zumischt.

FIG. 1

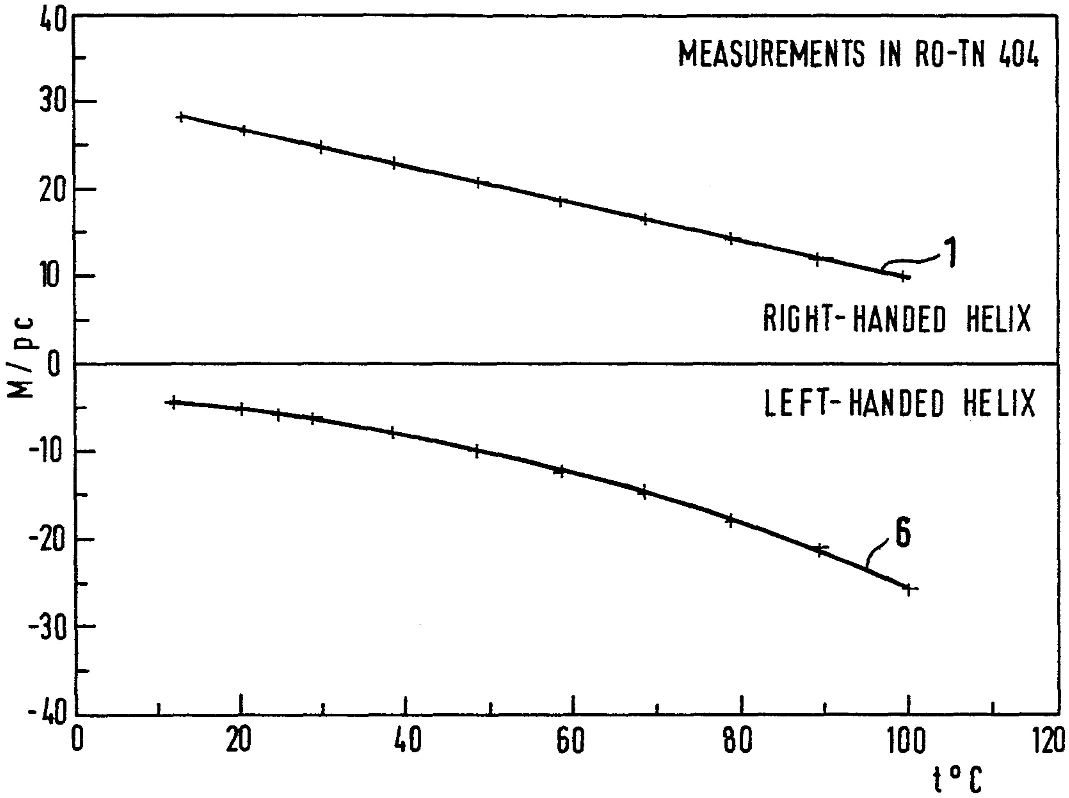
MEASUREMENTS IN RO-TN 404
RIGHT-HANDED HELIX
LEFT-HANDED HELIX
M / pc
t° C
1
6
40
30
20
10
0
-10
-20
-30
-40
0
20
40
60
80
100
120

FIG. 2

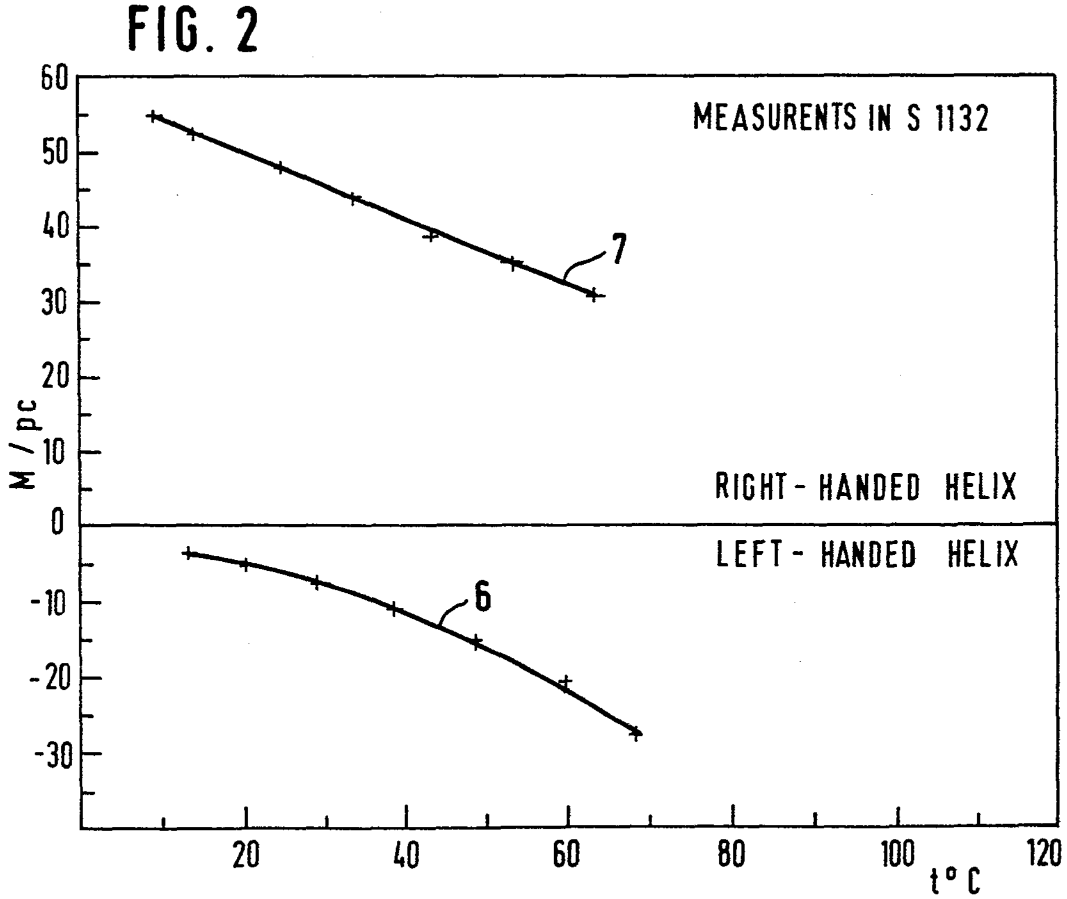
MEASURENTS IN S 1132
RIGHT - HANDED HELIX
LEFT - HANDED HELIX
M / pc
t° C
7
6
60
50
40
30
20
10
0
-10
-20
-30
20
40
60
80
100
120